# EUROPEAN PATENT SPECIFICATION

(11) **EP 1 518 018 B1**
(45) Date of publication and mention of the grant of the patent: **17.02.2010**
(21) Application number: 03761497.1
(22) Date of filing: 24.06.2003
(51) Int. Cl.: D21C 9/00, C08B 1/00

(54) **TREATMENT OF A MIXTURE CONTAINING CELLULOSE WITH A REDUCING AGENT**
BEHANDLUNG VON EINER CELLULOSEHALTIGEN MISCHUNG MIT EINEM REDUZIERENDEN MITTEL
TRAITEMENT D'UN MELANGE CONTENANT DE LA CELLULOSE AVEC UN AGENT DE REDUCTION

(30) Priority: 26.06.2002 US 184009
(43) Date of publication of application: 30.03.2005
(73) Proprietor: Borregaard Industries Limited, Norge, 1701 Sarpsborg (NO)
(72) Inventor: SCARPELLO, Justin, T., N-0363 Oslo (NO); BRATEKAS, Asbjorn, E., N-1726 Sarpsborg (NO); BARTHOLSEN, Ove, N-1739 Borgenhaugen (NO); HJERDE, Torgeir, N - 1710 Sarpsborg (NO); MERZ, Gunnar, 21683 Stade (DE)
(74) Representative: Ricker, Mathias
(86) International application number: PCT/EP2003/006652
(87) International publication number: WO 2004/003290

(56) References cited:
- CA-A- 610 655
- US-A- 2 898 333
- US-A- 5 035 772
- US-B1- 6 325 892

## Description

### Field of the Invention

The present invention relates to a method for treating a mixture containing cellulose according to claim 1. Furthermore, the invention relates to the use of the specialty cellulose pulp according to the invention or the specialty cellulose pulp obtained by a method according to the invention for the production of cellulose ethers or cellulose esters. Cellulose derivatives obtained from the specialty cellulose pulp according to the invention display increased viscosity and/or improved brightness over cellulose derivatives obtained from specialty cellulose pulp not subjected to the inventive treatment.

Specialty cellulose pulp is used to manufacture a number of products that require physical and chemical properties not provided by the pulp used for the manufacture of standard paper, linerboard or cardboard. Specialty cellulose pulp therefore differs from the major portion of cellulose pulp produced in the world today.

Any treatment that a mixture containing cellulose is subjected to, in particular if it is to be used as specialty cellulose pulp, has to be performed as to maintain the properties important to the end use, in particular the integrity of the cellulose molecules themselves. One of the most important steps of treatment of a mixture containing cellulose, typically obtained from pulping wood, is a step of bleaching, or, in most applications, a multi-stage bleaching process. Bleaching is commonly achieved by treating a pulp slurry with chemicals that either remove colored compounds such as lignin, or alter the structure of colored compounds so that they are no longer colored. The extent to which a specialty cellulose is bleached depends on the requirements for the end-product manufactured from the specialty cellulose pulp.

The expert in the field typically understands a bleaching process as one that increases the ISO brightness of a mixture containing cellulose. Futhermore, the expert in the field typically understands that bleaching is achieved primarily by oxidation processes, i.e. bleaching of any mixture containing cellulose according to the prior art typically involves the application of an oxidizing agent. For environmental reasons, common elemental chlorine bleaching using chlorine and/or hypochlorite is successively replaced by elemental chlorine free bleaching (ECF) processes, wherein chlorine dioxide replaces chlorine and/or hypochlorite. Totally chlorine free (TCF) bleaching uses chlorine-free bleaching agents such as oxygen or peroxides. A method for the non-chlorine bleaching of cellulose pulp using oxygen gas in sophisticated treatment stages is described in, for example, US 6 126 782. Other oxidizing agents are ozone or enzymes. JP-A 0 6 033 390 for example discloses a method for using ozone to bleach pulp. A main concern is to limit the oxidizing agent exposure time in order to limit damage to the cellulose molecules.

In summary, bleaching techniques known to the expert in the field typically involve oxidizing agents. The degree of ISO brightness achievable by these methods of bleaching is limited to the extent that strong oxidizing agents (or highly concentrated oxidizing agents) which would result in a high degree of ISO brightness also tend to damage the cellulose molecules. In particular, strong or highly concentrated oxidizing agents tend to reduce the degree of polymerization (DP) of the cellulose.

A process known as "reductive bleaching" is used commonly for brightening virgin mechanical pulps or pulp from recycled newsprint. In this process, a reducing agent, typically sodium borohydride, is used to generate sodium hydrosulfite in situ from primary chemicals, i.e. the reducing agent is not used to reduce carbonyl-groups in the pulp but to generate a bleaching agent. This process is disclosed, e.g. on pages 502 through 504 of "Pulp Bleaching; Principles and Practice", Dence and Reeve (Eds.), TAPPI Press, 1996.

CA 610 655 describes a process for increasing the brightness of cellulosic materials and increasing their resistance to yellowing with age. Commercial bleached spruce sulphite pulp was treated with sodium borohydride and it was found that the brightness of said pulp was increased over the brightness of untreated pulp.

US 2 898 333 also relates to a method of treating cellulose with borohydride. Therein, the amount of expensive borohydride necessary to achieve the improved yellowing effect is lowered by adding a water soluble salt of Li, Mg, Ca, Sr and Ba.

US 6 325 893 relates to a single stage delignification process. Therein, the reducing agent is added before the bleaching process breaking down unwanted lignin that is present in wood pulp together with the cellulose fibers.

The use of reducing agents is also known in the context of late stages of the treatment of cellulose pulps. For example, US 5 501 711 discloses the use of borohydrides to treat cellulose fabric that already had been subjected to a bleaching treatment. Here, the application of reducing agents improves the dyeability of said cellulosic fibers. The US 6 217 621 relates to stripping textile fibers, including cellulose acetates and other products obtained from specialty cellulose pulp, of their dyes by using reducing agents such as borohydrides.

Another process involving the use of reducing agents in the context of the treatment of cellulose pulp is disclosed in US 5 035 772. Said process involves treating a cellulose pulp that had already been bleached with one or more reducing agents in order to reduce carbonyl groups on the lignin contained in the cellulose pulp. The process includes adding a complexing agent together with the reducing agent and processing the mixture at a temperature not greater than 40°C. This treatment is followed by at least one further step: either a treatment with a chemical that will block the phenolic hydroxyl groups of the lignin and/or a treatment to convert short-wave light quanta to long wave light quanta. The object of the process according to the US 5 035 772 is to prevent the yellowing with age of lignin contained in (high yield) cellulose pulps. The process is to be used with ground-wood pulp, refiner pulp, thermo-mechanical and chemical-mechanical pulp for paper manufacture. Therefore, the US 5 035 772 does not relate at all to the treatment of specialty cellulose pulp.

Finally, the possible use of borohydrides has been discussed in "Pulp Bleaching; Principles and Practice", Dence and Reeve (Eds.), TAPPI Press, 1996, pages 297, wherein a borohydride is mentioned as a possible additive to eliminate some of the loss in strength of paper induced by the alkaline extraction.

The object of the present invention was to provide a method of treating a mixture containing cellulose leading to specialty cellulose pulp, so that the degree of brightness or the viscosity of cellulose derivatives obtained therefrom (in particular cellulose ethers or cellulose esters), or both, is/are increased over the prior art.

Surprisingly, it was found that this object could be achieved by treating a mixture containing cellulose according to claim 1 comprising at least one step of adding at least one agent capable of reducing carbonyl groups.

The solution according to the invention is particularly surprising since the prior art does not teach that treating a mixture containing cellulose, i.e. treating a pulp, leads to cellulose derivatives obtainable from the treated pulp with improved viscosity and/or brightness in comparison to a similar cellulose derivative obtained by the same process but excluding the inventive step of adding at least one agent capable of reducing carbonyl groups.

### Brief Description of the Figures

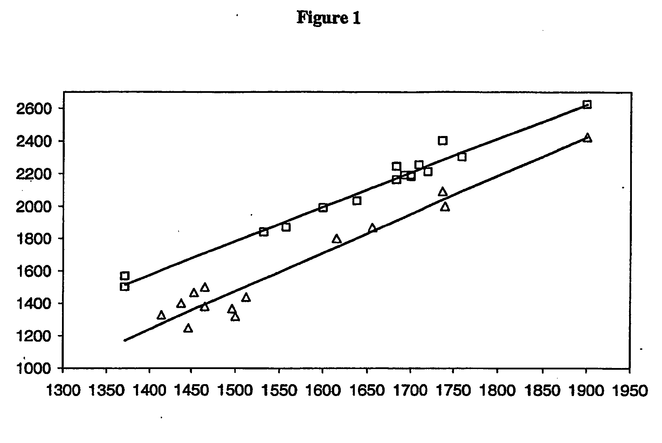

In FIG 1, the viscosity of the (derivative) end product obtained via etherification from the inventive specialty cellulose pulp, CMC, (vertical axis; units: mPa s) is shown as a function of the limiting viscosity number of the specialty cellulose pulp as defined in the standard "SCAN-CM 15:99" (horizontal axis, units: dm³/kg).

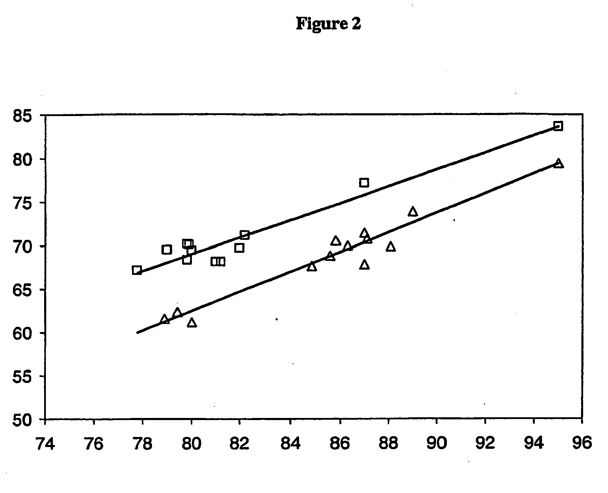

In FIG 2, the brightness of CMC powder (vertical axis, units: % brightness) is shown as a function of the ISO brightness of the specialty cellulose pulp from which the CMC powder has been obtained by means of etherification (horizontal axis; units: % brightness)

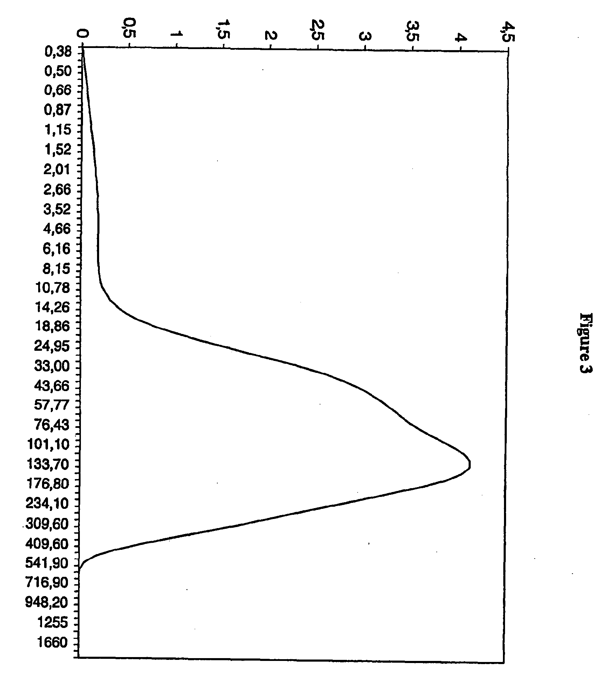

FIG 3 shows a typical particle size distribution of a CMC powder after grinding in the Fritsch Pulvarisette 19 knife mill as used in Examples 1, 2 and 3. The horizontal x-axis represents the particle diameter in µm, while the vertical y-axis represents the volume of the corresponding particles in %.

### Detailed Description of the Invention

A "mixture containing cellulose" according to the invention is any mixture that contains the glucose polymer of cellulose. No principal limitations exist as to the state of the cellulose source, i.e. it may be solid, liquid, a suspension, slurry, paste or powder. Furthermore, no limits exist as to the origin of the cellulose. In a preferred embodiment, the mixture containing cellulose is derived from cotton linters and/or wood. In a particularly preferred embodiment, the mixture containing cellulose is derived from wood. Other cellulose sources, in particular annual plants and/or biomass, (micro)biologically produced and/or derived cellulose, or cellulose from all types of cell walls are included as well.

Furthermore, no limitations exist with respect to the degree of polymerization of the mixture containing cellulose, as well as of any product, such as specialty cellulose pulp and/or derivatives thereof, obtained from said mixture containing cellulose.

According to the invention, the mixture containing cellulose may be derived from raw materials that need to be pulped. In general, the term "pulping" refers to any process that separates the cellulose from the at least one component that holds the cellulose together in the raw material. For example, in wood, the cellulose is held together by lignin and hemicellulose in fibers. The pulping process is meant to separate, at least partly, the lignin from the carbohydrate moieties of these fibers.

As to pulping processes, three different methods are commonly discerned: (i) chemical pulping (or "cooking"), (ii) mechanical (or "groundwood") pulping and (iii) semi-chemical or chemical-mechanical pulping. In (i), the raw material, typically wood, is cooked in a "digester" at elevated temperatures with chemicals suited to break the bonds between the cellulose molecules and the lignin. In (ii), the raw material is typically pressed against a grinder which physically separates the fibers. The process (iii) refers to any combination of (i) and (ii). In the context of the present invention, no principal limitations exist as to how the pulping is to be performed, so long as the pulping results in a mixture containing cellulose that can be subjected to the treatment according to the invention.

"Pulping" may not be necessary for all raw materials. For example, if cotton linters are used as the mixture containing cellulose, no chemical or mechanical pulping is necessary prior to any subsequent treatment, including the inventive treatment and/or bleaching.

A mixture containing cellulose that has been pulped as described above, is commonly referred to as "pulp". The term "mixture containing cellulose" is only meant to describe the pulp *before* the treatment according to the invention.

Although the inventive method of treating a mixture containing cellulose with the objective to obtain specialty cellulose pulp can be, in principle, performed with any mixture containing cellulose, the method according to the invention is particularly effective, and therefore preferred, when applied to a mixture containing cellulose derived from wood. It is further preferred to pulp the wood chemically prior to the inventive treatment.

As far as wood as a source for the mixture containing cellulose is concerned, both hardwood and softwood tree species may be used. Examples of softwoods include but are not limited to: pines, in particular Southern pine, White pine, Caribbean pine; Western hemlock; spruces, in particular Norway Spruce, Sitka Spruce; Douglas fir or the like. Examples of hardwoods include, but are not limited to: gum, maple, oak, eucalyptus, poplar, beech, or aspen. Mixtures of two or more types of soft and/or hard wood are included as well.

Prior to the at least one step of adding at least one agent capable of reducing carbonyl groups and/or prior and/or during and/or after any step of pulping, the mixture containing cellulose may be optionally subjected to any type of pretreatment. Such types of pretreatment include but are not limited to enzyme treatments, mechanical refining, addition of additives, addition of complexing agents, treatment with delignification and other catalysts, the removal of fines as well as any combination of the aforementioned steps.

After the mixture containing cellulose has been prepared and/or obtained and/or pretreated, the mixture is subjected to a bleaching process. The term "bleaching" as used in the context of the present invention refers to any treatment of the mixture containing cellulose in which the degree of brightness after the bleaching is increased over the degree of brightness before bleaching. The term "ISO brightness" as used in the context of the present invention is defined in "ISO 2470-1999 - paper, boards and pulp - measurements of the diffuse blue reflectance factor (ISO brightness)" and refers to the brightness of the pulp. It is important to discriminate this term from the term "brightness" as used in the context of the present invention, which refers to the brightness of the end product, i.e. the derivative of the specialty cellulose pulp. A standard for measuring said brightness according to the invention is given in Example 6. In principle, bleaching can be performed with any agent capable of achieving the above mentioned objective.

In accordance with claim 1, at least one agent capable of reducing carbonyl groups (= reducing agent) is added to the mixture containing cellulose. As a reducing agent in the context of the present invention, every compound or mixture of compounds can be used that results in at least the partial reduction of at least a part of the carbonyl groups in at least one of the components contained within the pulp.

Carbonyl groups form a part of the molecular structure of the main compounds in any mixture containing cellulose. As compounds are to be named, by way of example, cellulose, hemicellulose, lignin and resins. The carbonyl groups according to the invention that are, at least partially, reduced in the inventive step of adding a reducing agent, may either be naturally present in the raw-material structures or may be generated during processing or both. This is particularly true of the mixtures containing cellulose used for the manufacture of specialty cellulose pulps derived from wood but is also the case, to a lesser extent, for pulp derived from other raw materials, such as pulp derived from cotton linters.

In principle, any agent that at least partially reduces at least part of the carbonyl-groups present in the mixture containing cellulose can be used. Borohydrides are particularly preferred, while water-compatible borohydride salts are further preferred. Such salts include but are not limited to sodium borohydride, potassium borohydride, lithium borohydride, sodium cyanoborohydride, sodium triacetoxyborohydride, sodium trimethoxyborohydride, tetramethylammonium borohydride, tetramethylammonium triacetoxyborohydride, tetraethylammonium borohydride, tetrabutylammonium borohydride, tetrabutylammonium cyanoborohydride, cetyltrimethylammonium borohydride, benzyltriethylammonium borohydride, Bis(triphenyl-phosphine) copper(I) borohydride, lithium aluminium hydride, dimethylamineborane (DMAB) and mixtures of at least two of these. Preferably, said reducing agents used should be water-soluble.

The reducing agent can be used by itself, in combination with other reducing agents and/or in combination with stabilizers such as calcium hydroxide, magnesium bicarbonate or other mildly basic salts. Further additional substances with other purposes may be added as well.

The reducing agents and/or additional substances may be added as a solid, a powder, a dispersion, suspension, emulsion or as a solution. In a preferred embodiment, if borohydrides are used, they are used in powder form or in the form of a standard solution, e.g. sodium borohydride, which can be purchased as a 12 wt% solution in 40 wt% aqueous sodium hydroxide (e.g. Borol® from Rohm and Haas, Hydrafin^{™} from Finnish Chemicals (Nokia) Ltd). All commercially available forms of these chemicals, as well as any chemical of this kind prepared in a laboratory, may be used to carry out the treatment of a mixture containing cellulose as disclosed here.

According to the present invention, the at least one reducing agent is added, after the last stage of a multi-stage bleaching process.

The content of reducing agent added in said step may vary from 0.01 to 500g, preferably from 0.1 g·mol/ton mixture containing cellulose (dry basis) to 2000 g·mol/ton mixture containing cellulose, depending on the chemical additives and the specific composition of the mixture containing cellulose. In a preferred embodiment of the invention, wherein sodium borohydride is added as the carbonyl-reducing agent and the sole purpose of the at least one step of the treatment is the chemical reduction of carbonyl groups, the charge is between 0.3 and 100 g·mol/ton mixture containing cellulose (on a dry basis).

The reducing agent may be added together with any other agent or substance, so long as the at least one additional agent does not prevent the reducing agent to at least partly reduce at least a part of the carbonyl groups. In a preferred embodiment, the pH achieved in the pulp upon adding the at least one reducing agent is below 12.

As far as the at least one oxidizing agent that may be added in a multi-stage bleaching process is concerned, any agent(s) known to the expert in the field may be used. Examples of such oxidizing agents may be selected from but are not limited the following group: chlorine, chlorine dioxide, hypochlorite, chlorite, oxygen, per-compounds such as peroxide, and ozone, as well as mixtures of two or more of the aforementioned substances.

Another agent that is commonly used during the bleaching process of a specialty cellulose pulp, namely sodium hydroxide, may be added before and/or during and/or after any of the at least one step of bleaching as mentioned above. The main purpose of adding sodium hydroxide is the extraction of at least a part of the hemicellulose portion of the pulp, as well as, to some extent, regulation of the pH value. The amount and/or conditions under which the sodium hydroxide is to be added are known to the expert in the art.

The aforementioned treatment of the mixture containing cellulose, can be carried out in any reaction device known to the expert in the field in the context of pulp bleaching processes, for example in a bleaching tower, so long as the device is adapted to comply with health and safety issues related to the use of the specific reducing agent(s) and/or any other agent used. There are no limitations as to the design and/or function of the reaction device. For example, it may be a vessel or a tube, operated in batch mode or continuously.

In a preferred embodiment, said reaction device will be a steel tower of the type known to the expert for commercial-scale cellulose pulp bleaching processes. In a further preferred embodiment, the device will be of dimensions such that cellulose retention time under reaction conditions ranges from up to 6 hours. Preferably, the device is of sufficient dimensions so that the reaction time ranges up to 3.5 hours. The actual size of the reaction device is, inter alia, determined by the pulp production rate in a continuous process and, correspondingly, by the batch volume in a batch process. Preferably, the reaction device is fitted with a fan capable of maintaining a level of hydrogen gas well below the explosion limit since hydrogen gas may be generated during treatment with a borohydride. Any other method capable of keeping the amount of hydrogen in the reaction device below the explosion limit, such as hydrogen scavengers, controlled reactions of hydrogen or purging the reaction device with inert gases or mixtures containing inert gases may be used as well.

The mixture containing cellulose that is to be subjected to the treatment according to the invention is pumped into the aforementioned reaction device. Preferably, it is pumped in the device in the form of an aqueous slurry, having a content ranging from 0.1 to 40 wt% of pulp based on dry mass of the mixture containing cellulose, preferably a content ranging from 1 to 25wt%, further preferred ranging from 5 to 15 wt%. The mixing of the slurry with the reducing agents may take place either inside or outside the reaction device, by means of a chemical mixer or any other means that produces homogeneous mixing. Any other chemicals added to the reactor device (e.g. for pH adjustment, bleaching purposes, hemicellulose extraction purposes or as chemical aids to the main chemical functions in the process stage) may also be mixed into the slurry inside or outside the reaction device. Preferably, any mixing takes place outside of the reactor device, as this facilitates the formation of an homogeneous reaction slurry.

As far as the temperature at which the at least one reducing agent is added to the mixture containing cellulose, is concerned, any temperature is conceivable at which the at least one reducing agent at least partly reduces carbonyl groups contained in the mixture. In case of an integrated method comprising several process stages, in particular several stages of bleaching, the process temperature may be chosen to be suitable for all stages. In a preferred embodiment, the temperature will be set as to optimize the integrated process, or, if necessary, regulated as to optimize each stage individually. In a further preferred embodiment, the multi-stage bleaching process is carried out at a temperature ranging from ambient temperature to 140°C.

In a further preferred embodiment and in particular if the chemical reduction of carbonyl groups in the pulp is the primary object, the temperature for the bleaching process ranges from ambient temperature to 80°C, further preferred from 35°C to 75°C and yet further preferred from 50°C to 60°C. Furthermore, if the function of the inventive treatment also relates to delignification or to any form of bleaching, in addition to chemical reduction of carbonyl groups, the temperature of the reaction device is set to a value that allows the best combination of bleaching action and chemical reduction of carbonyl groups. In a process stage of the process in which common bleaching chemicals known to the expert in the field are used, temperatures should preferably range from ambient temperature to 80°C, further preferred from 30°C to 70°C.

The heating of the reactor device is effected using heaters or heat-exchangers of the type known to the expert in the field.

The pH-value of the pulp slurry containing the previously described active chemical agents should be between 5 and 14. As for the case of temperature, the pH of a preferred embodiment of the invention depends on the full process function of the process stage in question.

Most preferably, especially if sodium borohydride is used as the carbonyl-reducing chemical, the pH should be maintained between 6 and 14, in a preferred embodiment between 10 and 13 as to minimize decomposition of the borohydride moiety and subsequent hydrogen gas release. A pH between 11 and 12 is particularly preferred. For the same reason, it is preferable to adjust the pH of the pulp slurry to a sufficiently high pH prior to the addition of sodium borohydride. This can be achieved by adding sodium hydroxide to the slurry at a point between the previous process stage and the addition of sodium borohydride. The amount of sodium hydroxide added depends on the pH of the mixture containing cellulose that is fed from the previous process stage.

As a result of the treatment of the mixture containing cellulose described above, in particular after treating said mixture after a multi-stage bleaching process by adding a reducing agent, a treated mixture containing cellulose is obtained. In the context of the present invention, this mixture is referred to as (treated) "specialty cellulose pulp", i.e. as a pulp that has been treated and can now be further processed to obtain specialty cellulose products. One class of products obtainable from specialty cellulose pulp in accordance with the present invention are cellulose ethers.

Said cellulose ethers, for example sodium carboxymethylcellulose, methylcellulose, methylhydroxyethylcellulose, methylhydroxypropylcellulose, hydroxyethylcellulose, hydroxypropylcellulose, ethylcellulose, and mixtures of at least two components thereof, are used as additives in a large range of household and industrial products. The main purpose of adding said cellulose ethers to other materials lies in the possibility of controlling the rheological properties of said materials. The viscosity of the cellulose ether solution (henceforth termed cellulose ether viscosity), which is strongly related to the degree of polymerisation (DP) of the cellulose in the pulp feedstock, is therefore one of the most important properties of cellulose ethers.

The upper limit of cellulose ether viscosity that can be obtained is per se limited by the upper limit of the cellulose DP in the specialty cellulose pulp from which the cellulose ether is derived, as well as by the DP of the cellulose ether molecule following etherification.

Furthermore, in a large proportion of products containing cellulose ethers, the appearance of the product is of high importance. Value is often attached to a cellulose ether solid that is as white as possible, and to a cellulose ether solution that is as transparent as possible. The upper limit of brightness of cellulose ether that may be achieved is principally limited by the upper limit of the ISO brightness of the specialty cellulose pulp from which it is derived.

The brightness achievable for commercial cellulose ether products is also indirectly limited by the viscosity of the specialty cellulose pulp feed-stock. This is because of a tradeoff in the production of specialty cellulose pulp between high ISO brightness and high cellulose DP in the specialty cellulose pulp.

The specialty cellulose pulp as obtained after the inventive treatment with at least once agent capable of reducing carbonyl group after bleaching in a multi-stage bleaching process, can now be subjected to any step of post-treatment.

Of particular importance in this context is the removal of water from the specialty cellulose pulp. This can be achieved by filtering, pressing, drying at temperatures above room temperature, applying a pressure that is below the partial pressure of water etc. Examples of other post-bleaching steps, that may be applied either prior to, during, or after water removal, are, but are not limited to, removal of fines, enzyme treatments, and the addition of or treatments with chemical agents to improve pulp processability characteristics. In a preferred embodiment, the specialty cellulose is present in the form of a solid sheet or powder, preferably obtained after at least one step of post-treatment.

The specialty cellulose pulp obtained as described above can be subjected to any step of further processing and/or derivatization. Of particular interest in the context of the present invention is any process of forming cellulose derivatives. Cellulose ethers and/or cellulose esters are derivatives in accordance with the present invention. Following bleaching and post-treatment (including a possible stage of drying), the specialty cellulose sheets are packed in a roll or sheets of a given configuration determined by the cellulose derivative producer and transported to the cellulose derivative producer. There, the sheets are typically cut up or ground to a powder. In the case of cellulose ethers, the pulp pieces or powder is typically pre-treated with sodium hydroxide at below room temperature and reacted with the desired etherifying agents in an oxygen-free environment at temperatures between 60 and 100°C. The cellulose ether product is washed free of salts, dried and often ground to become the final product.

The viscosity of a cellulose ether as obtained from the specialty cellulose pulp as described above can be improved by at least 8-50% using the treatment as disclosed in this invention compared to the same product not subjected to the at least one step of adding of at least one reducing agent during the processing of the specialty cellulose pulp. Characteristic advantages of the method according to the invention over the prior art for etherification products obtained from the specialty cellulose pulp (in a substantially oxygen-free environment) are illustrated in FIG 1 and FIG 2.

In FIG 1, the effect of the method according to the invention as applied to a mixture containing cellulose from wood pulp is shown. The viscosity of a sodium carboxymethyl cellulose (CMC), i.e. a cellulose derivative obtained via etherification from the specialty cellulose pulp according to the invention, is shown in FIG 1. Here the viscosity of the end product, CMC, (vertical axis; units: mPa s) is shown as a function of the limiting viscosity number of the specialty cellulose pulp as defined in the standard "SCAN-CM 15:99" (horizontal axis, units: dm³/kg).

It can be seen that across a broad range of specialty cellulose degree of polymerization (as represented by its limiting viscosity number values), the corresponding viscosity of a 1% aqueous solution of CMC varies linearly, irrespective of whether the mixture containing cellulose is treated according to the invention (open squares; solid line indicates least square fit) or if the mixture had not been treated with at least one reducing agent (open triangles) in accordance with the process described in claim 1. The data clearly show two distinct linear relationships for treated and untreated pulps. However, the viscosity of the CMC resulting form the treated specialty cellulose pulp is constantly about 200 mPa s higher than the viscosity of the untreated, but otherwise same, mixture. These data provide clear evidence that specialty cellulose pulp that had not been treated according to the invention does not reach its fullest degree of polymerization (DP) during etherification, as evidenced by a significantly lower viscosity of the end product.

According to the present invention, specialty cellulose pulp leading to cellulose ethers and esters as obtained from chemically and/or mechanically pulping wood can be obtained, for the first time, with a viscosity of 1700 dm³/kg as measured according to the standard "SCAN-CM 15:99". In a preferred embodiment, said viscosity is higher than 1750 dm³/kg, with more than 1800 dm³/kg being particularly preferred. In a further preferred embodiment the viscosity of said product ranges from 1650 dm³/kg s to 2000 dm³/kg.

The large effect of the at least partial reduction of carbonyl groups in a specialty cellulose pulp on the brightness of its cellulose ether derivative was particularly unexpected. It has been found that the brightness could be improved from 5% to 80%. This effect is shown in FIG 2, where the brightness of CMC powder (vertical axis, units: % brightness) is shown as a function of the intrinsic ISO brightness of the specialty cellulose pulp from which the CMC powder has been obtained by means of etherification (horizontal axis; units: % brightness). It can be clearly seen that the brightness of the treated specialty cellulose pulp (open squares) results in a powder brightness that is from 5 to 20% higher than the corresponding brightness of the powder resulting from the untreated specialty cellulose pulp (open triangles).

An integrated process may be employed to obtain specialty cellulose pulp. This process comprises at least the following steps:
(I) Chemical or chemical and mechanical pulping of a raw material containing cellulose resulting in a mixture (I) containing cellulose;
(II) treating an unpulped mixture containing cellulose or treating a mixture (I) containing cellulose, wherein the treatment comprises at least one step of adding at least one agent capable of reducing carbonyl groups, resulting in a treated specialty cellulose pulp (II) ;
(III) at least one step of post-processing of the specialty cellulose pulp (II);
wherein the steps (I) and (III) are optional.

According to the invention, step (II) is performed after a multi-stage bleaching process. In a further preferred embodiment, the step (III) of post-processing comprises at least one step of removing water and/or of drying at temperatures above room temperature.

The specialty cellulose pulp as claimed in this invention can be used for any application for which specialty cellulose pulp is better suited than regular pulp used for the manufacture of paper or cardboard. In particular, all applications in which cellulose molecules alone or in combination with other materials can be used, are included.

By way of example but without the intent to limit the scope of the invention, the following areas of use are mentioned: manufacture of cellulose derivatives, in particular of cellulose ethers or cellulose esters; textile fibers, in particular viscose or high tenacity rayon yam, non-woven fabrics; micro-crystalline cellulose, formulations for food, in particular as edible diet, food, pharmaceutical or cosmetics applications, technical filters, absorbing materials, fluff fibers, photographic papers, as an additive during plastic molding, the use of said fibers in graft copolymerisation, as a component in composite materials, applications in packaging, paints, inks, thickeners, LCD screens, high value specialty papers, laminates, battery separators, electrical circuits and the like.

### Examples

In the following, working examples are used to illustrate the present invention. Theses examples, however are not meant to limit the scope of the invention as described above.

### Example 1: Production of specialty cellulose pulp according to the invention and subsequent carboxymethylation

Norway spruce was cooked in batch using the acid sulfite process. Once cooking was complete, the pulp had a mean kappa number (SCAN method C 1:77) of 46. This pulp was transferred to a bleach plant typical of the design found in other bleach plants used in the manufacture of specialty and other cellulose pulps.

In this first example the pulp bleaching process consists of four distinct, industrial scale stages, working continuously and in series, followed in series by a one stage, industrial-scale embodiment of the inventive treatment. All these stages, with the exception of the inventive treatments, are variations on bleach treatments common in the specialty cellulose and other cellulose pulp industries, and are well known to one skilled in the art.

The main treatment at each of the five stages comprising this example is carried out in stainless steel reactors commonly known as bleach towers, some of which are lined inside with chemically resistant materials, typical of those commonly used in the specialty cellulose and other cellulose pulp industries. Some additional but important procedures, such as washing, dilution, filtration, and chemical dosing, are carried out either prior to the pulp entering, or after the pulp leaving the towers. Details of the conditions inside each of the five towers and the bleaching, extraction chemical, and reducing agent dosages used in this example of the invention can be found in Table 1.

**Table 1: Details of the conditions inside the towers at each stage of processing in Example 1.**

| **Treatment stage** | **Parameter** | **Units** | **Level** |
|---|---|---|---|
| E₀ | NaOH | Kg/ton pulp (dry) | 57 |
| | Temperature | °C | 95 |
| | Residence time | Minutes | 132 |
| | Consistency | % | 11.5 |
| | Borol Solution® | Kg/ton pulp (dry) | 5 |
| | | | |
| D₀ | pH | - | 2 |
| | Temperature | °C | 15 |
| | Residence time | Minutes | 43 |
| | Consistency | % | 3.5 |
| | ClO₂ | Kg/ton pulp (dry) | 8.2 |
| | | | |
| P₀ | pH | - | 11 |
| | Temperature | °C | 35 |
| | Residence time | Minutes | 126 |
| | Consistency | % | 10 |
| | H₂O₂ | Kg/ton pulp (dry) | 2 |
| | | | |
| D₁ | pH | - | 2.5 |
| | Temperature | °C | 45 |
| | Residence time | Minutes | 148 |
| | Consistency | % | 10 |
| | ClO₂ | Kg/ton pulp (dry) | 10 |
| | | | |
| P₁ | pH | - | 11.6 |
| | Temperature | °C | 29 |
| | Residence time | Minutes | 163 |
| | Consistency | % | 10 |
| | H₂O₂ | Kg/ton pulp (dry) | 2.5 |
| B | pH | - | 11.6 |
| | Temperature | °C | 53 |
| | Residence time | Minutes | 163 |
| | Consistency | % | 10 |
| | Borol Solution® | Kg/ton pulp (dry) | 5 |

The term "consistency" as used in the context of the present invention refers to the dry mass of pulp in weight percent with respect to the total mass of pulp.

The first stage of this example of the invention, the stage (E₀), is an alkaline extraction. In this stage, in addition to the main component NaOH, a borohydride is added in the form of Borol Solution® (a 12 wt% solution of sodium borohydride in 40 wt% aqueous sodium hydroxide purchased from Rohm and Haas). The dosage of Borol Solution® was 5 kg/ ton pulp (dry basis) which amounts to 15.9 g moles of sodium borohydride per ton dry pulp. This dosage was carried out immediately prior to the pulp entering the tower. Prior to the dosage of sodium borohydride, the pulp was twice washed with deionized water, passed over a filter and press dewatered. Following pressing and prior to the sodium borohydride dosage, 58 kg/ ton pulp (dry basis) of sodium hydroxide was dosed. Immediately prior to the pulp entering the E₀ tower, the consistency of the pulp slurry was 11.5%. In the E₀ bleach tower, the temperature was maintained at 95°C. The residence time of the pulp slurry at the base of the E₀ tower was 132 minutes. The alkaline extraction stage serves the purpose of hemicelluose removal and the borohydride serves as an additive to eliminate some of the loss in strength of paper induced by the alkaline extraction.

The second stage, namely the stage (D₀), is a chlorine dioxide treatment. Prior to entering the D₀ tower, the pulp slurry was pressed and washed with deionized water, then washed a second time over a filter. Prior to the pulp entering the D₀ tower, the pH was adjusted to 1.9, and 8.2 kg/ ton pulp (dry basis) of chlorine dioxide was dosed. Following this chemical dosage, the consistency of the pulp slurry was 3.5%. In the D₀ tower, the temperature was maintained at 15°C. The residence time of the pulp slurry in the D₀ tower was 43 minutes.

The third stage, namely the stage (P₀), is an oxidative bleaching stage using hydrogen peroxide. Prior to entering the P₀ tower, the pulp-slurry was washed with deionized water over a filter. The pH of the pulp slurry was then adjusted to 10.9 using sodium hydroxide, and 2.0 kg/ton pulp (dry basis) hydrogen peroxide was added. The consistency of the pulp slurry was then 10%. In the P₀ tower, the temperature was maintained at 35°C. The residence time of the pulp slurry in the P₀ bleach tower was 125 minutes.

The fourth stage, namely the stage (D₁), is a chlorine dioxide treatment. Prior to entering the D₁ tower, the pulp was washed with deionized water over a filter. The pH of the pulp slurry was then adjusted to 2.5 using sulphur dioxide, and 10 kg/ton pulp (dry basis) of chlorine dioxide was dosed. In the D₁ tower, the temperature was maintained at 45°C. The residence time of the pulp slurry in the D₁ tower was 148 minutes.

The fifth stage of this example of the invention, namely the stage (B), has the sole purpose of effecting chemical reduction of the carbonyl groups in the pulp, and is therefore the inventive borohydride treatment. Sodium borohydride was dosed in the form of Borol Solution®. The dosage of Borol Solution® was 5 kg/ ton pulp (dry basis), which amounts to 15.9 g moles of sodium borohydride per ton dry pulp. This dosage was carried out immediately prior to the pulp entering the B tower. Prior to the dosage of sodium borohydride, the pulp was washed with deionized water over a filter and the pH of the slurry adjusted to 11.5 using sodium hydroxide. Immediately prior to the slurry entering the B tower, its consistency was 10%. In the B tower, the temperature was maintained at 55°C. The residence time of the pulp slurry in the B tower was 163 minutes.

After leaving the B tower, the pulp slurry was washed with deionized water over a filter and the pH adjusted to 4. The pulp was then transported to the drying section of the specialty cellulose manufacturing process, where it was screened, washed in deionized water, and dried to a moisture content of 7%. The dried pulp was packed in a form (approx. 20 ton rolls) typical of finished product specialty cellulose that is ready for sale to other parties wishing to use this as raw material for a cellulose derivatization.

The properties of the finished specialty cellulose product can be found in Table 2.

**Table 2: Selected properties of specialty cellulose pulp produced according to Example 1.**

| | |
|---|---|
| Brightness (ISO 2470-1999) (%) | 82.00 |
| Limiting viscosity number (SCAN-CM 15:99) (ml/.g) | 1532 |
| S 18 (SCAN-C2:61) (alkali solubility of pulp; in %) | 7.02 |

A 50 g sample of the specialty cellulose pulp manufactured using the inventive treatment described above and with properties as found in Table 2 was subjected to etherification yielding sodium carboxymethyl cellulose (CMC).

The aforementioned specialty cellulose pulp sample was first ground using a knife mill (Fritsch pulvarisette 19). The resulting specialty cellulose pulp powder had a mean particle size of 200 µm as measured by a Coulter LS 200 particle analyzer. 35 g of powder (weighed on a dry basis) and was subsequently etherified to carboxymethyl cellulose according to the carboxymethylation procedure described in Example 4. The 1 wt% solution viscosity and powder brightness of the resultant carboxymethyl cellulose product was measured. The corresponding values can be found in Table 3.

**Table 3: Selected properties of CMC made from specialty cellulose pulp produced as per Example 1. The degree of substitution of the CMC was 1.05.**

| | |
|---|---|
| Viscosity of 1 wt% aqueous solution (mPa s) | 1840 |
| Powder brightness (%) | 71.1 |

Details of the procedures used for viscosity and brightness measurements of CMC can be found in Example 4.

### Example 2: Production of specialty cellulose pulp and subsequent carboxymethylation without the inventive treatment (comparative example)

In this example, exactly the same processing conditions as described in Example 1 (within the repeatability limits for an industrial scale process) were used in the stages E ₀, D₀, P₀ and D₁. However, no inventive treatment stage was applied in the form of the addition of sodium borohydride or any other agent capable of reducing carbonyl groups at stage B. In this comparative Example 2, an oxidative bleaching stage using hydrogen peroxide (P₁) was directly substituted for the inventive stage B that had been applied in Example 1. Therefore, in this case, the pulp bleaching process consisted of five distinct, industrial scale stages, working continuously and in series. Details of the conditions inside each of the five towers and the bleaching and extraction chemical dosages used in this example of the invention can be found in Table 4.

**Table 4: Details of the conditions inside the towers at each stage of processing in Example 2.**

| **Treatment stage** | **Parameter** | **Units** | **Level** |
|---|---|---|---|
| E₀ | NaOH | Kg/ton pulp (dry) | 58 |
| | Temperature | °C | 95 |
| | Residence time | Minutes | 134. |
| | Consistency | % | 11.5 |
| | Borol Solution® | Kg/ton pulp (dry) | 5. |
| | | | |
| D₀ | pH | - | 1.9 |
| | Temperature | °C | 15 |
| | Residence time | Minutes | 43 |
| | Consistency | % | 3.5 |
| | ClO₂ | Kg/ton pulp (dry) | 8.9 |
| | | | |
| P₀ | pH | - | 11 |
| | Temperature | °C | 35 |
| | Residence time | Minutes | 126 |
| | Consistency | % | 10 |
| | H₂O₂ | Kg/ton pulp (dry) | 2 |
| | | | |
| D₁ | pH | - | 2.5 |
| | Temperature | °C | 45 |
| | Residence time | Minutes | 148 |
| | Consistency | % | 10 |
| | ClO₂ | Kg/ton pulp (dry) | 10 |
| | | | |
| P₁ | pH | - | 11.6 |
| | Temperature | °C | 29 |
| | Residence time | Minutes | 163 |
| | Consistency | % | 10 |
| | H₂O₂ | Kg/ton pulp (dry) | 2.5 |

The stage P₁, being the 5^{th} treatment stage during the bleaching of the specialty cellulose pulp in this example, was a hydrogen peroxide treatment. The chemical reactor (bleach tower) used for this treatment was the same tower used as stage B in Example 1. Prior to entering the P₁ tower, the pulp was washed with deionized water over a filter and 2.5 kg/ ton pulp (dry basis) was then dosed simultaneous to the pH of the slurry being adjusted to 11.8 using sodium hydroxide. Immediately prior to the slurry entering the P₁ tower, its consistency was 10%. In the P₁ tower, the temperature was maintained at 29°C. The residence time of the pulp slurry in the P₁ tower was 163 minutes.

The properties of the finished specialty cellulose product can be found in Table 5.

**Table 5: Selected properties of specialty cellulose pulp produced according to Example 2.**

| | |
|---|---|
| Brightness (ISO 2470-1999) (%) | 85.80 |
| Limiting viscosity number (SCAN-CM 15:99) (dm³/kg) | 1574 |
| S 18 (SCAN-C2:61) (alkali solubility of pulp; in %) | 7.00 |

A 50 g sample of the specialty cellulose pulp manufactured using the treatment described above and with properties as found in Table 5 was subjected to etherification to sodium carboxymethyl cellulose (CMC).

The aforementioned specialty cellulose pulp sample was first ground using a knife mill (Fritsch pulvarisette 19). The resultant specialty cellulose pulp powder had a mean particle size of 200 µm as measured by a Coulter LS 200 particle analyzer. 35 g of powder (weighed on a dry basis) was subsequently etherified to carboxymethyl cellulose according to the carboxymethylation procedure described in Example 4. Relevant properties of the resultant carboxymethyl cellulose product were measured, and their values are found in Table 6.

**Table 6: Selected propertied of CMC made from specialty cellulose pulp produced as per Example 2. The degree of substitution of the CMC was 1.05.**

| | |
|---|---|
| Viscosity of 1 wt% aqueous solution (mpa.s) | 1530 |
| Powder brightness (%) | 70.6 |

A comparison of the 1 wt% solution viscosity of the CMC obtained from specialty cellulose pulp obtained from Example 1 (Table 3) with that from Example 2 (Table 6), reveals a substantially superior CMC viscosity of the CMC derived from pulp from Example 1 (20% higher). This is despite the limiting viscosity number of the pulp from Example 1 being 42 units lower than the pulp from Example 2.

Furthermore, despite the ISO pulp brightness of the specialty cellulose pulp from Example 1 being 3 units lower than the pulp from Example 2, the CMC powder brightness is of the same magnitude. These improvements in CMC viscosity per unit pulp viscosity, and CMC brightness per unit pulp brightness, are indicative of the effect of the inventive treatment disclosed here.

Details of the procedures used for viscosity and brightness measurements of CMC can be found in Examples 5 and 6.

### Example 3: Post-bleaching processing of specialty cellulose pulp using the inventive treatment and subsequent carboxymethylation

In this example, a 50 g sample of the specialty cellulose pulp manufactured using the treatment described in Example 2 and with properties as found in Table 4 was treated as per an embodiment of the inventive treatment.

The 50 g pulp sample was partitioned into two equal halves of 25 g each. These samples were separately wet and torn into strips in 2.5 L of deionized water. The pulp suspension was then homogenized using a desintegrator (a steel rotor blade of 6 cm diameter rotating at 600 RPM for 30 seconds). Both pulp suspensions were transferred into the same sealable plastic container. Into the pulp suspension was added 0.233 g of Borol Solution®, amounting to 5 kg of Borol Solution®/ton pulp (dry basis), or 15.9 g moles of sodium borohydride per ton pulp (dry basis). The pH was then adjusted to 11.2 using sodium hydroxide.

The container containing the pulp suspension was sealed and shaken, and set in a water bath at a temperature of 55°C for 180 minutes. The pulp suspension was then washed twice with 51 of deionized water and dried to a moisture content of 7%. The limiting viscosity number and the ISO brightness of the pulp following the inventive treatment were found to be unchanged from those of the pulp prior to applying the inventive treatment. The pulp properties are therefore the ones found in Table 5.

This specialty cellulose pulp sample was then ground using a knife mill (Fritsch pulvarisette 19). The resultant specialty cellulose pulp powder had a mean particle size of 200 µm as measured by a Coulter LS 200 particle analyzer. 35 g of powder (weighed on a dry basis) was subsequently etherified to carboxymethyl cellulose according to the carboxymethylation procedure described in Example 4. Relevant properties of the resultant carboxymethyl cellulose product were measured, and their values are found in Table 7.

**Table 7: Selected propertied of CMC made from specialty cellulose pulp produced as per Example 7. The degree of substitution of the CMC was 1.05.**

| | |
|---|---|
| Viscosity of 1 wt% aqueous solution (mpa.s) | 1870 |
| Powder brightness (%) | 75.6 |

A comparison of the 1 wt% solution viscosity of the CMC obtained from specialty cellulose pulp obtained from Example 3 (Table 7) with that from Example 2 (Table 6), reveals a substantially superior CMC viscosity of the CMC derived from pulp from Example 2 (22% higher). This is despite having the same limiting viscosity number of the pulp.

Furthermore, the CMC powder brightness of the CMC obtained from specialty cellulose pulp obtained from Example 3 is 5 units, or 7%, higher than the CMC from example 2. This is despite the two pulps having the same ISO brightness values. These improvements in CMC viscosity per unit pulp viscosity, and CMC brightness per unit pulp ISO brightness, are indicative of the effect of the inventive treatment disclosed here.

### Example 4:Carboxymethylation procedure (as used in Examples 1 through 3)

*Chemicals:* Specialty Cellulose pulp, treated as per invention (Borregaard ChemCell, Sarpsborg, Norway); iso-propanol (87 wt-% in H₂O and 100 wt-%, ρᵢₛₒ = 0.780 g ml⁻¹); N₂ (g); sodium hydroxide (s); sodium mono-chloroacetate, 99% pure (s); acetic acid; phenolphthalein; methanol (70 wt-%, ρₘₑₜₕ = 0.891 g ml⁻¹); silver nitrate solution (0.1 M); deionized water.
*Equipment:* Refrigerator; analytical balance accurate to 1/100^{th} of gram; Parr-reactor complete with stirring (cooled), external heating-element, internal cooling element, N₂ feed and temperature control; knife mill (Fritsch Pulverisette 19); measuring cylinders (100 ml, 500 ml); glass beaker; plastic beakers (100 ml, 2 liter); graduated pipette (2-10 ml); glass mixing rod; vacuum flask; ceramic vacuum funnel; black band filter paper; watch glass (25 cm diameter); vacuum dryer.

The purpose of this example is to illustrate the process leading from the specialty cellulose pulp according to the invention to the derivative end product, in this case an etherified derivative. However, any other derivatization would be conceivable in this context, in particular any process of esterification.

35 g (dry basis) of specialty cellulose pulp ground in the knife mill was introduced into the Parr-reactor. Immediately following this, precooled (5°C) iso-propanol solution (448 ml 100 % iso-propanol + 40.7 ml deionized water) was then poured in to the reactor. The heating jacket was fixed in place and the reactor sealed. The stirrer arm and its oler were then connected. The nitrogen gas feed was turned on and the flow-rate regulated to 100 ml/min. The cooling water feeding both the stirrer and reactor cooling coil was turned on.

Stirring was set to 250 rpm and the temperature controller program (0°C for 15 mins; 5°C per min for 2 mins to 10°C for 60 mins; 1°C per minute for 50 mins to 60°C for 60 minutes; 5°C per minute for 6 mins to 20°C for 30 mins) was initiated.

After 15 minutes at 0°C, 22.0 g NaOH (NaOH-to-cellulose molar ratio is 2.5) in 20.4 ml deionized water was introduced to the reactor. This is done rapidly to avoid oxygen entering the reactor. Immediately afterwards, 78 ml iso-propanol (100 %) was rapidly introduced. The stirring speed was then increased to. 500 rpm for a few seconds to attain a uniform mixture. then decreased again to 250 rpm and the reactor was left for 60 minutes at 10°C.

51.3 g sodium monochloroacerate (MCA) (MCA-to-cellulose molar ratio is 2.0) was mixed with 44 ml of iso-propanol (87 %) and rapidly introduced to the reactor. The remaining, undissolved MCA residue was washed into the reactor with a further 44 ml of 87% iso-propanol. The stirring speed was then set at 500 rpm for a few seconds, then set back to 250 rpm. The temperature program then ensured the reactor contents were heated to 60°C over 50 minutes and remained at this temperature for 60 minutes. The total reaction time (with MCA) was therefore 120 minutes.

At the completion of 60 minutes at 60°C, the reactor contents were neutralized (phenolphthalein indicator) using an acetic acid solution (5 g acetic acid in 10 ml 87 % iso-propanol). The reactor contents were vacuum-filtered and the product was first washed with 700 ml of iso-propanol (87 %), then four times with 700ml of methanol (70 %). After the 5^{th} and final wash, the filtrate methanol was checked for being chloride free using a few drops of AgNO₃. No precipitation of AgCl was observed meaning the product was sufficiently chloride free.

The washed product was dried in a vacuum drying cabinet at 60°C over night The product was weighed to 1/100^{th} of a gram and its moisture content determined. The product was then ground to a powder of mean particle size of 119 µm and a particle size distribution as shown in Figure Al, in the knife mill.

### Example 5: Procedure for measurement of the viscosity of a CMC solution,

2.00 g of CMC powder (dry basis) was dissolved in 200 ml of deionized water using a mechanical stirrer arm rotating at 200 rpm over the course of 1 hour at room temperature. The 1 wt% CMC solution was then transferred to a constant temperature water bath set at 20°C.

An Anton Paar Physica UDS 200 was used to perform the viscosity measurement. The temperature bath on the instrument was first set to 20°C, and the spindle (MK 25/8) was mounted. The measurement program was initiated and 5.5 ml of 1 wt% CMC solution is placed in the receptor below the spindle. The spindle was set in the "measuring position" and surplus sample was removed. Measurement was initiated and the dynamic viscosity in mPa.s was read as that reported from the machine measurement at a shear rate of 11.3 s⁻¹ as the spindle is on the way up.

### Example 6: Procedure for measurement of the brightness of a CMC powder

CMC powder was placed into a stainless steel receptor fitted with a threaded press and a glass plate that ensured a pressed, smooth powder surface. After the CMC powder was placed on the glass plate, the press was screwed into place, and the device was turned upside down and disassembled. The powder then lay on the circular glass plate with the smoothed powder surface facing upwards. The plate and powder sample was then placed in a Minolta CM-3630 apparatus, and the CMC powder brightness read at a wavelength of 457 nm. Each sample was prepared twice and the average of brightness readings is reported.

It should be noted that in order to obtain complete reproducibility of this procedure, any CMC powder analyzed must have the same or a very similar mean particle size and a particle size distribution as that described in FIG 3. FIG 3 shows a typical particle size distribution of a CMC powder after grinding in the Fritsch Pulvarisette 19 knife mill as used in Examples 1, 2 and 3. The horizontal x-axis represents the particle diameter in µm while the vertical y-axis represents the volume of the corresponding particles in %.

## Claims

1. A method for treating a mixture containing cellulose that has not been pulped or that has been pulped chemically or chemically and mechanically, wherein the treatment comprises at least one step of adding at least one agent capable of reducing carbonyl groups and wherein the mixture containing cellulose is an aqueous slurry of cellulose leading to cellulose ethers or cellulose esters, **characterized in that** the at least one agent capable of reducing carbonyl groups is added after the last stage of a multi-stage bleaching process.

2. A method according to claim 1, **characterized in that** the mixture containing cellulose is obtained from (i) chemically or chemically and mechanically pulping wood or is obtained from (ii) unpulped cotton linters or from any combination of (i) and (ii).

3. A method according to claim 1 or 2, **characterized in that** the cellulose content in the aqueous slurry is from 1 to 40 % by weight, with respect to the total weight.

4. A method according to any of the preceding claims, **characterized in that** the at least one agent capable of reducing carbonyl groups is selected from the group of borohydrides, DMAB, LiAlH and mixtures thereof.

5. A method according to any of the preceding claims, **characterized in that** the overall content of agent capable of reducing carbonyl groups added to the mixture containing cellulose is from 0.1 to 200 g·moles per ton of the dry mixture containing cellulose.

6. A method according to any of the preceding claims, **characterized in that** the step of adding at least one agent capable of reducing carbonyl groups is performed at temperatures from ambient temperature to 90°C.

7. A method according to any of the preceding claims **characterized in that** the step of adding at least one agent capable of reducing carbonyl groups is performed at a pH value from 8 to 14.

8. Specialty cellulose pulp leading to cellulose ethers or cellulose esters, obtainable by a process as described in any one of claims 1-7.

9. Specialty cellulose pulp according to claim 8, **characterized in that** the viscosity or the brightness, or both, of cellulose ethers or esters obtained from said specialty cellulose pulp are increased over the viscosity or the ISO brightness, or both, obtained from a specialty cellulose pulp that has not been treated with the at least one step of adding at least one agent capable of reducing carbonyl groups.

10. Specialty cellulose pulp according to claim 9, **characterized in that** the viscosity of the specialty cellulose pulp leading to cellulose ethers or esters, as measured according to the standard "SCAN-CM 15:99", is increased by at least 50•10⁻³ m³/kg (50 dm³/kg) over the viscosity obtained from a specialty cellulose pulp that has not been treated with the at least one step of adding at least one agent capable of reducing carbonyl groups.

11. Specialty cellulose pulp leading to cellulose ethers or esters that has been obtained from chemically and mechanically pulping wood or from chemically or mechanically pulping wood, **characterized in that** the specialty cellulose pulp leading to the cellulose ethers or esters have a viscosity of at least 1.7m³/kg (1700 dm³/kg) as measured according to the standard "SCAN-CM 15:99".

12. Use of cellulose ethers or esters obtained according to any one of claims 1-7 or obtainable according to any one of claims 8-10 for the production of viscose, composite materials, micro-crystalline cellulose formulations for food, cosmetics and pharmaceutical applications, technical filters, special photographic paper, as an additive during plastic molding, high-tenacity rayon yarn for tires and industrial hoses, paints, printing inks, LCD screens, high value specialty paper applications, battery separators, circuit boards and non-woven fabrics.

## Patentansprüche

1. Verfahren zur Behandlung eines Gemischs enthaltend Zellulose, welches nicht zerfasert ist oder welches chemisch oder chemisch und mechanisch zerfasert ist, wobei die Behandlung zumindest einen Schritt der Zugabe mindestens eines Stoffs enthält, welcher geeignet ist, Carbonylgruppen zu reduzieren, und wobei das Gemisch enthaltend Zellulose eine wässrige Aufschwämmung von Zellulose ist, die zu Zelluloseethern oder zu Zelluloseestern führt, **dadurch gekennzeichnet, dass** der mindestens eine Stoff, der geeignet ist, Carbonylgruppen zu reduzieren, nach dem letzten Schritt eines Mehrfachschritt-Bleichungsprozesses zugegeben wird.

2. Verfahren nach Anspruch 1, **dadurch gekennzeichnet, dass** das Gemisch enthaltend Zellulose ist erhalten wird aus (i) chemischer oder chemischer und mechanischer Zerfaserung eines Holzes oder erhalten wird aus (ii) nicht zerfasertem Baumwoll-Linterstoff oder aus einer Kombination aus (i) und (ii).

3. Verfahren nach Anspruch 1 oder 2, **dadurch gekennzeichnet, dass** die Menge an Zellulose in der wässrigen Masse 1 bis 40 % Massenprozent, bezogen auf das Gesamtgewicht, beträgt.

4. Verfahren nach einem der vorherigen Ansprüche, **dadurch gekennzeichnet, dass** der mindestens ein Stoff, der geeignet ist, Carbonylgruppen zu reduzieren, ausgewählt wird aus der Gruppe bestehend aus Borhydrid, DMAB, LiAlH und deren Mischungen.

5. Verfahren nach einem der vorherigen Ansprüche, **dadurch gekennzeichnet, dass** die Gesamtmenge des Stoffes, der geeignet ist, Carbonylgruppen zu reduzieren, welcher dem Gemisch enthaltend Zellulose zugegeben wird, 0,1 bis 200 g mol pro Tonne des trockenen Gemischs enthaltend Zellulose beträgt.

6. Verfahren nach einem der vorherigen Ansprüche, **dadurch gekennzeichnet, dass** der Schritt der Zugabe mindestens eines Stoffs, welcher geeignet ist, Carbonylgruppen zu reduzieren, bei Temperaturen von Raumtemperatur bis 90° C durchgeführt wird.

7. Verfahren nach einem der vorherigen Ansprüche, **dadurch gekennzeichnet, dass** der Schritt der Zugabe mindestens eines Stoffs, welcher geeignet ist, Carbonylgruppen zu reduzieren, bei einem pH-Wert von 8 bis 14 durchgeführt wird.

8. Spezial-Zellulosefasern, die zu Zelluloseethern oder Zelluloseestern führen, erhältlich durch das Verfahren beschrieben in einem der Ansprüche 1-7.

9. Spezial Zellulosefasern nach Anspruch 8, **dadurch gekennzeichnet, dass** die Viskosität oder die Helligkeit oder beides, der Zelluloseether oder -ester, die aus den genannten Spezial-Zellulosefasern erhalten wurden, erhöht ist im Vergleich zur Viskosität oder ISO-Helligkeit, oder beiden, von Zelluloseethern oder -estern, die aus Spezial-Zellulosefasern erhalten wurden, die nicht mit dem Stoff behandelt wurden, welcher geeignet ist, Carbonylgruppen zu reduzieren.

10. Spezial-Zellulosefasern nach Anspruch 9, **dadurch gekennzeichnet, dass** die Viskosität der Spezial-Zellulosefasern, welche zur Zelluloseethern oder -estern führen, gemessen nach dem Standard "SCAN-CM 15:99", um mindestens 50•10³ m³/kg (50 dm³/kg) erhöht ist gegenüber der Viskosität von Zelluloseethern oder -estern erhältlich aus Spezial Zellulosefasern, welche nicht mit dem Stoff, welcher geeignet ist, Carbonylgruppen zu reduzieren, behandelt wurden.

11. Spezial-Zellulosefasern, welche zur Zelluloseethern oder -estern führen, welche durch chemisches und mechanisches Zerfasern des Holzes oder durch chemisches oder mechanisches Zerfasern des Holzes erhältlich sind, **dadurch gekennzeichnet, dass** die Spezial-Zellulosefasern, welche zur Zelluloseethern oder - estern führen, eine Viskosität von mindestens 1,7 m³/kg (1700 dm³/kg) aufweisen, gemessen gemäß Standard "SCAN-CM 15:99".

12. Verwendung von Zelluloseethern oder -estern, erhältlich nach einem der Ansprüche 1-7 oder gemäß einem der Ansprüche 8-10 für die Herstellung von Viskose, Verbund-Materialien, mikrokristallinen Zellulose-Formulierungen für Lebensmittel, Kosmetik und pharmazeutische Anwendungen, technische Filter, besondere fotografische Papiere, als Additive während des plastischen Formens, als hochfeste Garne für Räder und industrielle Schläuche, Farbe, Drucktinte, LCD-Bildschirme, hochwertige besondere Papieranwendungen, Batterie-Separatoren, Platinen und nicht-gewobene Stoffe.

## Revendications

1. Procédé pour traiter un mélange contenant de la cellulose qui n'a pas été réduite en pâte ou qui a été réduite en pâte chimiquement ou chimiquement et mécaniquement, où le traitement comprend au moins une étape d'addition d'au moins un agent capable de réduire les groupes carbonyle et où le mélange contenant de la cellulose est une suspension aqueuse de cellulose conduisant à des éthers de cellulose ou des esters de cellulose, **caractérisé en ce** le au moins un agent capable de réduire les groupes carbonyle est ajouté après la dernière étape d'un procédé de blanchiment à étapes multiples.

2. Procédé selon la revendication 1 **caractérisé en ce que** le mélange contenant de la cellulose est obtenu à partir de (i) la réduction en pâte chimiquement ou chimiquement et mécaniquement de bois ou est obtenu à partir de (ii) linters de coton non réduits en pâte ou à partir de toutes combinaisons de (i) et (ii).

3. Procédé selon la revendication 1 ou 2 **caractérisé en ce que** la teneur en cellulose de la suspension aqueuse est de 1 à 40 % en masse, par rapport à la masse totale.

4. Procédé selon l'une quelconque des revendications précédentes **caractérisé en ce que** le au moins un agent capable de réduire les groupes carbonyle est choisi dans le groupe consistant en les borohydrures, DMAB, LiAlH et leurs mélanges.

5. Procédé selon l'une quelconque des revendications précédentes **caractérisé en ce que** la teneur totale d'agent capable de réduire les groupes carbonyle ajouté au mélange contenant de la cellulose est de 0,1 à 200 g.moles par tonne de mélange sec contenant de la cellulose.

6. Procédé selon l'une quelconque des revendications précédentes **caractérisé en en ce que** l'étape d'addition d'au moins un agent capable de réduire les groupes carbonyle est accomplie à des températures de la température ambiante à 90°C.

7. Procédé selon l'une quelconque des revendications précédentes **caractérisé en ce que** l'étape d'addition d'au moins un agent capable de réduire les groupes carbonyle est accomplie à un pH de 8 à 14.

8. Pâte de cellulose de spécialité conduisant à des éthers de cellulose ou des esters de cellulose, pouvant être obtenue par un procédé selon l'une quelconque des revendications 1-7.

9. Pâte de cellulose de spécialité selon la revendication 8 **caractérisée en ce que** la viscosité ou le brillant, ou les deux, d'éthers ou esters de cellulose obtenus partir de ladite pâte de cellulose de spécialité sont augmentés par rapport à la viscosité ou au brillant ISO, ou les deux, obtenus à partir d'une pâte de cellulose de spécialité qui n'a pas été traitée avec la au moins une étape d'addition d'au moins un agent capable de réduire les groupes carbonyle.

10. Pâte de cellulose de spécialité selon la revendication 9 **caractérisée en ce que** la viscosité de la pâte de cellulose de spécialité conduisant à des éthers ou des esters de cellulose, telle qu'elle est mesurée selon la norme "SCAN-CM 15:99", est augmentée d'au moins 50.10⁻³ m³/kg (50 dm³/kg) par rapport à la viscosité obtenue à partir d'une pâte de cellulose de spécialité qui n'a pas été traitée avec la au moins une étape d'addition d'au moins un agent capable de réduire les groupes carbonyle.

11. Pâte de cellulose de spécialité conduisant à des éthers ou esters de cellulose qui a été obtenue par réduction en pâte chimiquement et mécaniquement de bois ou par réduction en pâte chimiquement ou mécaniquement de bois, **caractérisée en ce que** la pâte de cellulose de spécialité conduisant aux éthers ou esters de cellulose a une viscosité d'au moins 1,7 m³/kg (1 700 dm³/kg) telle que mesurée selon la norme "SCAN-CM 15:99".

12. Utilisation d'éthers ou d'esters de cellulose obtenus selon l'une quelconque des revendications 1-7 ou pouvant être obtenus selon l'une quelconque des revendications 8-10 pour la production de viscose, de matériaux composites, de formulations de cellulose microcristalline pour les aliments, les cosmétiques et les applications pharmaceutiques, les filtres techniques, le papier photographique spécial, comme additif pendant le moulage des matières plastiques, fil de rayonne de haute ténacité pour pneumatiques et tuyaux industriels, peintures, encres d'impression, écrans LCD, applications de papiers de spécialité de haute valeur, séparateurs de batterie, plaquettes de circuit et étoffes non tissées.
